Europäisches Patentamt

European Patent Office

Office européen des brevets

(11) Veröffentlichungsnummer: **0 433 469 A1**

## (12) EUROPÄISCHE PATENTANMELDUNG

(21) Anmeldenummer: 89123360.3

(22) Anmeldetag: 18.12.89

(51) Int. Cl.5: **H04N 5/74**

(43) Veröffentlichungstag der Anmeldung:
**26.06.91 Patentblatt 91/26**

(84) Benannte Vertragsstaaten:
**ES FR GB IT**

(71) Anmelder: **BKE BILDTECHNISCHES KONSTRUKTIONS- UND ENTWICKLUNGSBÜRO INH. ERNST**

**STECHEMESSER**
**Industriestrasse 1-3**
**W-3412 Nörten-Hardenberg(DE)**

(72) Erfinder: **Stechemesser, Ernst**
**Marienstein 7**
**W-3412 Nörten-Hardenberg(DE)**

(54) Video-Projektionseinrichtung mit Schwenk-Hub-Anlage.

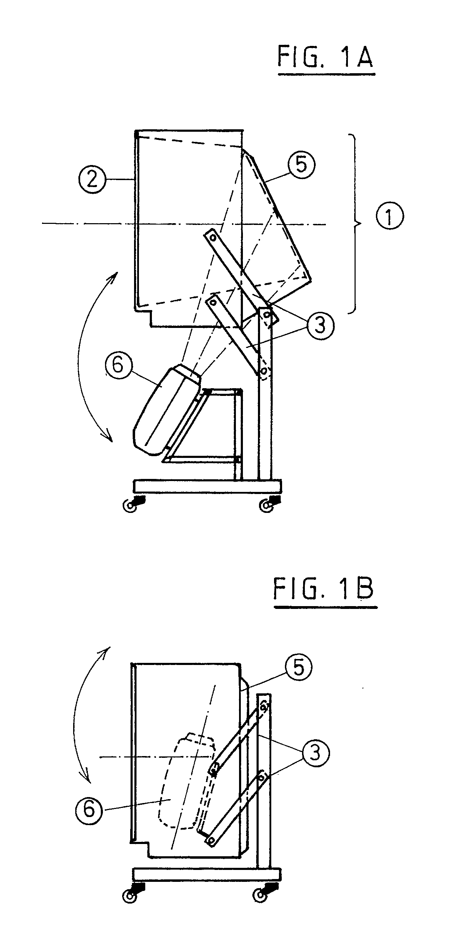

(57) Gegenstand der Erfindung sind Video-Projektionsboxen, bei denen durch geeignete Schwenk-, Vertikal- oder Schräg-Verschiebeeinrichtungen oder durch Klapp- und Drehvorrichtungen der obere Geräteteil mit der eingebauten Durchlicht-Projektionsscheibe 2 in einfacher Weise manuell oder durch Motorantrieb von einer oberen Betriebsposition zu einer unteren Ruhe- oder Transport-Position überführt werden kann, weil dies an einem Beispiel in den Abbildungen 1 A und 1 B dargestellt ist.

Durch die Positionsveränderung des oberen Geräteteils wird das Gesamtvolumen und die Gesamthöhe der Projektionsanlage in optimaler Weise dem jeweils gewünschten Benutzungszustand, Betrieb oder Lagerung bzw. Transport angepaßt. Die zugehörigen Projektionsgeräte 6, Umlenkspiegel 5 und sonstiges Zubehör, das vorzugsweise im Inneren des unteren Geräteteils untergebracht ist, kann ebenfalls durch geeignete Schwenk-, Hub-, Dreh- oder Kippeinrichtungen der jeweiligen Zustandsänderung angepaßt werden.

Video-Projektionsboxen nach der Erfindung eignen sich besonders für einen problemlosen Einsatz in Schulung, Information und Werbung.

FIG. 1A

FIG. 1B

EP 0 433 469 A1

# VIDEO-PROJEKTIONSEINRICHTUNG MIT SCHWENK-HUB-ANLAGE

Der Einsatz der Video-Projektion gewinnt im Bereich von Schulungen, Information und Werbung immer mehr an Bedeutung. Für eine lichtstarke, farbkräftige Video-Projektion in hellen Räumen haben sich besonders Projektionsboxen unterschiedlicher Größen und Ausführungen bewährt. Diese Boxen sind mit Durchlicht-Projektionsscheiben ausgerüstet, die in die Frontseite des Gerätes eingebaut sind. Das erforderliche Projektionsequipment mit Zubehör befindet sich in der Regel im Inneren des Gerätegehäuses, insbesondere im Fußteil der Anlage.

Die Verwendung von Video-Projektionsboxen wird jedoch häufig durch das Volumen und die Sperrigkeit der Gerätegehäuse eingeschränkt. Da bei derartigen Anlagen vorzugsweise großformatige Bildschirme mit Bildbreiten von mehr als 1 m bevorzugt werden, ergeben sich für die Gesamtabmessungen der Einrichtungen entsprechend große Dimensionen. Dies bedeutet, daß es teilweise schwierig ist, die Projektionsboxen durch Türen zu bewegen, sie in Fahrstühlen unterzubringen oder durch enge Treppenhäuser zu befördern. Auch der Transport der Projektionsanlagen in Kleinbussen bereitet häufig Platzprobleme.

Es ergab sich daher die Aufgabe, eine Video-Projektionsanlage in Boxenausführung mit frontseitig eingebauter Durchlicht-Projektionsscheibe zu konstruieren, die es trotz großformatiger Bildschirmabmessungen ermöglicht, die Gesamteinrichtung zum Transport innerhalb und außerhalb von Gebäuden durch geeignete Volumenreduzierung problemlos zu handhaben und zu befördern.

Nach der Erfindung wird dies dadurch erreicht, daß der obere Geräteteil 1 mit der frontseitig eingebauten Durchlicht-Projektionsscheibe 2 wie in Fig. 1 A und Fig. 1 B an einem Beispiel dargestellt ist, an Schwingarmen 3 gem. Fig. 1 A auf Arbeitshöhe angehoben oder gem. Fig. 1 B zum Transport an den Schwingarmen 3 in eine Grundposition abgesenkt werden kann.

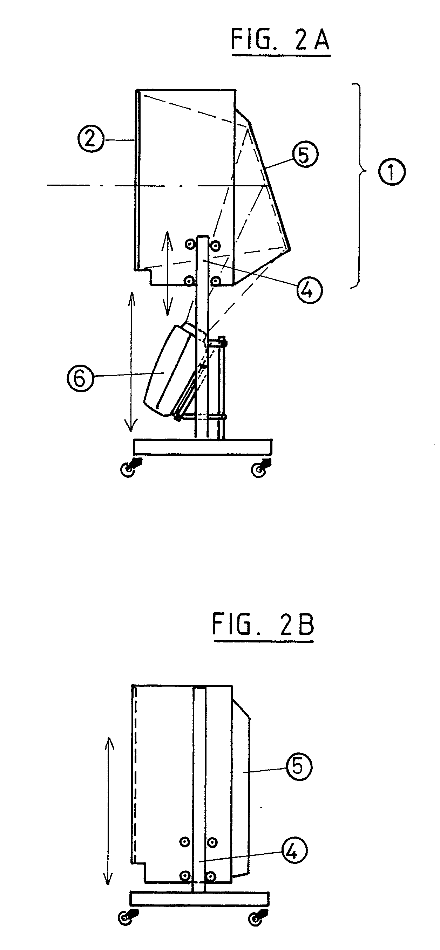

Gem. Fig. 2 A und Fig. 2 B kann das Heben und Senken des oberen Geräteteils 1 auch durch eine Parallelführung 4 oder durch eine andere ähnlich wirkende Vorrichtung erzielt werden.

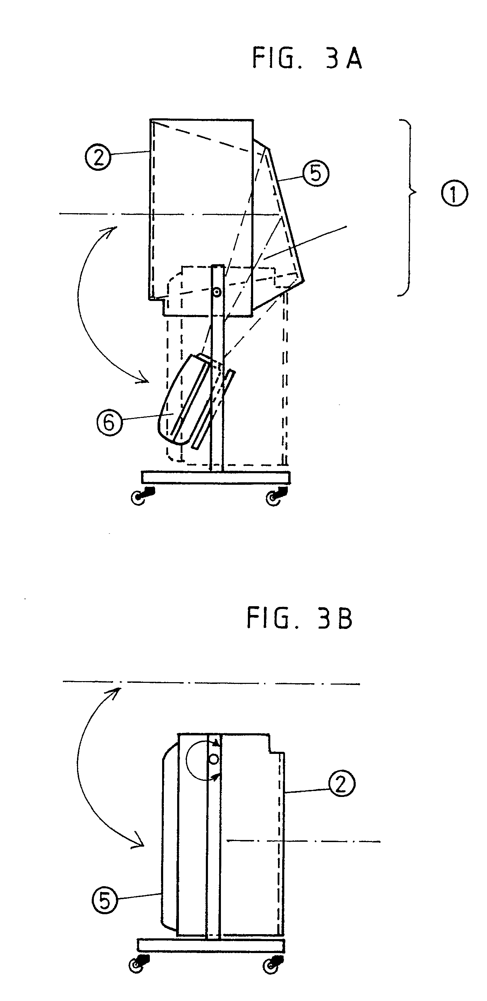

Eine derartige Einrichtung kann z.B. gemäß Fig. 3 A und 3 B eine Vorrichtung sein, bei der der obere Geräteteil 1 bei Benutzung in die Arbeitsposition (Fig. 3 A) hochgeklappt oder bei Nichtbenutzung und Transport in die Ruheposition (Fig. 3 B) heruntergeklappt wird. Andere ähnlich wirkende Ausführungen von Schwenk-, Hub- und Klappeinrichtungen sind ebenfalls zum Übergang zwischen Betriebsposition und Ruheposition gem. Fig. 1 A, 1 B, 2 A, 2 B, 3 A, 3 B zur Realisierung des Erfindungsgedankens einer volumen- und größenveränderbaren Projektionsbox möglich.

Beim Herunterschwingen, Absenken oder Herabklappen des oberen Geräteteils 1 (Fig. 1 bis 3) können die rückseitige Spiegelklappe 5 sowie evtl. weitere Umlenkspiegel-Einrichtungen nach Bedarf durch geeignete mechanische oder elektrische Zusatzeinrichtungen oder aus Kombinationen von beiden eingeschwenkt und wieder herausgeklappt werden. Hierdurch wird eine zusätzliche Volumenveränderung erzielt, deren Zweck eine möglichst umfassende Volumenreduzierung in der Ruhe- bzw. Transport-Position (Fig. 1 B, 2 B, 3 B) ist. Die zur Projektionsbox gehörenden Video-Projektoren 6 können fest in die Gehäuse, insbesondere in die Gehäuse-Unterteile eingebaut sein oder in diesen zur erforderlichen volumenmäßigen Anpassung ebenfalls schwenkbar, verschiebbar oder klappbar angeordnet sein.

Die Betätigung der einzelnen Schwenk-, Hub- oder Klapp-Einrichtungen kann manuell oder motorisch oder in Kombination beider Betriebsarten erfolgen. Die Verkettung der einzelnen Bewegungsabläufe kann durch mechanische oder elektrisch-elektronische Einrichtungen vorgenommen werden.

Volumen- und größenvariable Video-Projektionsboxen nach der Erfindung lassen sich bei Nichtgebrauch oder zum Transport in einfacher Weise auf günstige, leicht zu handhabende Aussenabmessungen reduzieren und daher problemlos lagern und transportieren. Das Zurückführen auf die erforderlichen volumen- und größenmäßigen Betriebspositionen ist einfach und mit wenigen Handgriffen möglich. Projektionsboxen nach der Erfindung eignen sich daher besonders für den Einsatz in Schulung, Information und Werbung.

## Ansprüche

1. Video-Projektionsbox mit frontseitig eingebauter Durchlicht-Projektionsscheibe (2), dadurch gekennzeichnet,
daß Schwingarme (3), Vertikal- oder Schräg- Parallelführungseinrichtungen (4) oder Kipp- bzw. Klapp-Einrichtungen vorgesehen sind, mittels derer das obere Gehäuseteil mit der eingebauten Durchlicht-Projektionsscheibe (2) von einer oberen Betriebsstellung in eine untere Pausen- und Transportstellung übergeführt werden kann.

2. Video-Projektionsbox nach Anspruch 1, dadurch besonders gekennzeichnet,
daß die zugehörige Video-Projektionsanlage mit allen Zusatzausstattungen vorzugsweise im unteren Geräteteil ebenfalls schwenkbar, heb- und senkbar oder klapp- und drehbar gelagert ist.

3. Video-Projektionsbox nach Ansprüchen 1 und 2, dadurch besonders gekennzeichnet,

daß die zur Anlage gehörenden Umlenkspiegel an geeigneten Schwenk-, Hub-, Klapp- oder Dreheinrichtungen (3,4) befestigt sind, so daß sie beim Übergang von der Betriebs-zur Ruheposition zur Erzielung der gewünschten Volumenänderung in entsprechende Betriebs- und Ruhe- bzw. Transport-Positionen übergeführt werden können.

4. Video-Projektionsbox nach Ansprüchen 1 bis 3, dadurch besonders gekennzeichnet,

daß manuelle oder motorische Antriebe oder Kombinationen der genannten Antriebseinrichtungen zur Ausführung der Volumenänderungs-Bewegungen vorgesehen sind.

## FIG. 1A

## FIG. 1B

FIG. 2 A

FIG. 2 B

# FIG. 3A

# FIG. 3B

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4358792 (J. D. DOMOLECZNY ET AL) <br> * Zusammenfassung; Figuren 1-5 * <br> * Spalte 4, Zeile 13 - Spalte 5, Zeile 2 * <br> --- | 1-4 | H04N5/74 |
| A | GRUNDIG TECHNISCHE INFORMATIONEN. <br> vol. 30, no. 1, 1983, REGENSBURG, DE <br> Seiten 3 - 11; H. Daum & F. Lohrer: <br> "GRUNDIG Cinema 9050, der Grossbildprojektor mit versenkbarem Projektionsschirm" <br> * Seite 5, linke Spalte, Zeilen 37 - 54; Figuren 1, 2 * <br> ----- | 1-4 | |

**RECHERCHIERTE SACHGEBIETE (Int. Cl.5 )**

H04N5/00
H04N9/00

Der vorliegende Recherchenbericht wurde für alle Patentansprüche erstellt

| Recherchenort | Abschlußdatum der Recherche | Prüfer |
|---|---|---|
| BERLIN | 28 MAI 1990 | DUDLEY C. |